# EUROPÄISCHE PATENTANMELDUNG

(11) **EP 4 316 701 A1**
(43) Veröffentlichungstag der Anmeldung: **07.02.2024**
(21) Anmeldenummer: 23183045.6
(22) Anmeldetag: 03.07.2023
(51) Int. Cl.: B22F 12/82, B22F 10/28, B22F 10/31, B22F 10/85, B22F 12/30, B33Y 10/00, B33Y 30/00, B33Y 50/02, B22F 10/38, B22F 10/50, B22F 12/13, B22F 7/08, B33Y 40/10

(54) **3D-DRUCKVERFAHREN ZUM ADDITIVEN AUFBAU EINES BEREICHS AUF EINEN VORGEFERTIGTEN GRUNDKÖRPER**

(30) Priorität: 05.08.2022 AT 5012722 U
(71) Anmelder: CERATIZIT Austria Gesellschaft m.b.H., 6600 Reutte (AT)
(72) Erfinder: PRAST, Josef, 6600 Reutte (AT)
(74) Vertreter: Ciesla, Dirk

(57) **Zusammenfassung**

3D-Druckverfahren zum additiven Aufbau eines Bereichs (300) auf einen vorgefertigten Grundkörper (2), wobei das 3D-Druckverfahren die folgenden Schritte hat: Messen von einer Ist-Grundkörperposition des vorgefertigten Grundkörpers (2) mittels eines Messarms (9); Ermitteln von einer Positionsabweichung zwischen der Ist-Grundkörperposition und einer Soll-Grundkörperposition des vorgefertigten Grundkörpers (2); Messen von einer Ist-Grundkörperorientierung des vorgefertigten Grundkörpers (2) mittels des Messarms (9); Ermitteln von einer Orientierungsabweichung zwischen der Ist-Grundkörperorientierung und einer Soll-Grundkörperorientierung des vorgefertigten Grundkörpers (2); 3D-Drucken von dem Bereich (300) auf den vorgefertigten Grundkörper (2), indem die Positionsabweichung und die Orientierungsabweichung beim 3D-Drucken kompensiert werden.

## Beschreibung

Die vorliegende Erfindung betrifft ein 3D-Druckverfahren zum additiven Aufbau eines Bereichs auf einen vorgefertigten Grundkörper und einen 3D-Drucker zum additiven Aufbau eines Bereichs.

Die WO 2021/083725 A1 zeigt ein vorderes Modul. Das vordere Modul hat ein Zwischenelement an einem hinteren Ende und einen Hauptkörper an einem vorderen Ende. Der Hauptkörper ist additiv auf das Zwischenelement aufgebaut worden.

Bei dem von der WO 2021/083725 A1 gezeigten vorderen Modul ist es sehr aufwendig und schwierig, den Hauptkörper präzise auf das Zwischenelement additiv aufzubauen.

Die Aufgabe der vorliegenden Erfindung besteht darin, ein 3D-Druckverfahren und einen 3D-Drucker zum additiven Aufbau eines Bereichs auf einen vorgefertigten Grundkörper so besser zu machen, der Bereich leichter handhabbar, präziser und qualitativ besser auf den vorgefertigten Grundkörper gedruckt wird.

Die technische Aufgabe der vorliegenden Erfindung wird gelöst durch den Gegenstand von Anspruch 1 und Anspruch 8. Vorteilhafte Weiterbildungen der Erfindung sind den abhängigen Ansprüchen, die untereinander frei kombinierbar sind, der Beschreibungseinleitung, der Figurenbeschreibung und den Figuren selbst zu entnehmen.

Das 3D-Druckverfahren zum additiven Aufbau eines Bereichs auf einen vorgefertigten Grundkörper hat die folgenden Schritte:
Messen von einer Ist-Grundkörperposition des vorgefertigten Grundkörpers mittels eines Messarms;
Ermitteln von einer Positionsabweichung zwischen der Ist-Grundkörperposition und einer Soll-Grundkörperposition des vorgefertigten Grundkörpers;
Messen von einer Ist-Grundkörperorientierung des vorgefertigten Grundkörpers mittels des Messarms;
Ermitteln von einer Orientierungsabweichung zwischen der Ist-Grundkörperorientierung und einer Soll-Grundkörperorientierung des vorgefertigten Grundkörpers;
3D-Drucken von dem Bereich auf den vorgefertigten Grundkörper, indem die Positionsabweichung und die Orientierungsabweichung beim 3D-Drucken kompensiert werden.

Das Verfahren hat den Vorteil, dass der Bereich auch dann auf den vorgefertigten Grundkörper gedruckt wird, wenn sich der vorgefertigte Grundkörper außerhalb von der Soll-Grundkörperposition und/oder außerhalb von der Soll-Grundkörperorientierung befindet. Das 3D-Drucken folgt dem vorgefertigten Grundkörper, wird diesem also nachgeführt. Eine exakte und damit aufwendige Positionierung und Orientierung von dem vorgefertigten Grundkörper so, dass der Bereich auf ihn gedruckt wird, entfällt mit Vorteil.

Der Messarm kann die Ist-Grundkörperorientierung auch an Stellen messen, die in Aufsicht auf den vorgefertigten Grundkörper verdeckt sind, aber für die Messung der Ist-Grundkörperorientierung besonders gut geeignet sind.

Indem der Bereich auf den vorgefertigten Grundkörper gedruckt wird, wird eine hybride Einheit hergestellt, die aufseiten des Bereichs durch den 3D-Druck insoweit eine komplizierte Geometrie erhalten kann, wie dies benötigt wird, und aufseiten des vorgefertigten Grundkörpers insoweit auf eine standardisierte Geometrie zurückgreifen kann, wie dies möglich ist. Die hybride Einheit vereint also die Vorteile von dem 3D-Druck mit den Vorteilen des vorgefertigten Grundkörpers.

Der vorgefertigte Grundkörper ist vorzugsweise subtraktiv hergestellt, zum Beispiel mittels Fräsen und/oder Bohren.

Der vorgefertigte Grundkörper ist vorzugsweise aus einem Stahl hergestellt.

Vorzugsweise wird der Bereich unter einer schichtweisen Auftragung von einem Pulvermaterial gedruckt, wobei es sich bei dem Pulvermaterial vorzugsweise um ein Stahlpulver handelt, insbesondere dann, wenn der vorgefertigte Grundkörper aus einem Stahl hergestellt ist.

Wenn dies nicht anders beschrieben wird, ist mit "drucken" "3D-drucken" gemeint.

Der Messarm ist vorzugsweise beim Messen von der Ist-Grundkörperorientierung kamerafrei ausgebildet, weil dies den Messarm leichter und damit energiesparender verstellbar macht. Analoges gilt vorzugsweise beim Messen von der Ist-Grundkörperposition.

Der Messarm misst die Ist-Grundkörperorientierung vorzugsweise mittels einer Berührung von dem vorgefertigten Grundkörper. Denkbar und auch möglich ist aber auch eine berührungsfreie Messung von der Ist-Grundkörperorientierung. Analoges gilt vorzugsweise beim Messen von der Ist-Grundkörperposition.

Gemäß einer Weiterbildung von dem 3D-Druckverfahren wird mittels des 3D-Druckens der Bereich unter Ausbildung eines Kühlmittelkanals gedruckt, wobei der Kühlmittelkanal an einen Grundkörperkanal des vorgefertigten Grundkörpers beim 3D-Drucken angeschlossen wird, indem die Positionsabweichung und die Orientierungsabweichung beim 3D-Drucken kompensiert werden. Dies hat den Vorteil, dass der Kühlmittelkanal des Bereichs auch dann an den Grundkörperkanal angeschlossen wird, wenn sich der vorgefertigte Grundkörper außerhalb von der Soll-Grundkörperposition und/oder Soll-Grundkörperorientierung befindet, ohne dass der vorgefertigte Grundkörper dafür exakt positioniert und orientiert werden müsste. Vorzugsweise mündet der Grundkörperkanal bezüglich eines Mittelpunkts von dem vorgefertigten Grundkörper in einer Oberseite von dem vorgefertigten Grundkörper exzentrisch.

Gemäß einer Weiterbildung von dem 3D-Druckverfahren wird der Kühlmittelkanal räumlich gekrümmt gedruckt. Dies hat den Vorteil, dass der so gedruckte Kühlmittelkanal ein Kühlmittel sanft umlenkt und an Abschnitten, die durch einen Kühlmittelkanal nicht geschwächt werden sollen, vorbeigeführt wird.

Gemäß einer Weiterbildung von dem 3D-Druckverfahren wird der vorgefertigte Grundkörper beim Messen von der Ist-Grundkörperposition und der Ist-Grundkörperorientierung und beim 3D-Drucken von dem Bereich aufgeheizt. Dies macht die Messung von der Ist-Grundkörperposition und der Ist-Grundkörperorientierung bezüglich eines analogen Aufheizens von dem vorgefertigten Grundkörper beim 3D-Drucken von dem Bereich präziser, weil die Ist-Grundkörperposition und die Ist-Grundkörperorientierung unter der thermischen Ausdehnung von dem vorgefertigten Grundkörper gemessen werden, die beim 3D-Drucken von dem Bereich vorliegt. Das Aufheizen beim 3D-Drucken von dem Bereich reduziert thermische Spannung.

Gemäß einer Weiterbildung von dem 3D-Druckverfahren wird der Bereich einem Werkzeugkopf oder einem Turbinenbauteil folgend gedruckt. Der Werkzeugkopf hat zum Beispiel mehrere Plattensitze zur reversibel lösbaren Montage von Schneidelementen. Das Turbinenbauteil ist zum Beispiel zum Einsatz bei Temperaturen größer 800°C ausgebildet und hat zum Beispiel einen internen Hohlraum.

Gemäß einer Weiterbildung von dem 3D-Druckverfahren wird nach dem 3D-Drucken mittels eines Messarmgrundkörpers von dem Messarm geprüft, ob eine vorgegebene Positionsbeziehung von dem Bereich gegenüber dem vorgefertigten Grundkörper und ob eine vorgegebene Orientierungsbeziehung von dem Bereich gegenüber dem vorgefertigten Grundkörper eingehalten werden. Es wird also geprüft, ob sich der Bereich nach dem Abschluss von dem 3D-Drucken strukturell verzogen hat. Der Messarmgrundkörper ist ein Teil von dem Messarm, der vorzugsweise mit einem Laserscanner zur Messung von der Positionsbeziehung und der Orientierungsbeziehung ausgestattet ist. Beim Messen von der Ist-Grundkörperposition und der Ist-Grundkörperorientierung ist der Messarmgrundkörper vorzugsweise mit einem taktilen Messtaster ausgestattet.

Gemäß einer Weiterbildung von dem 3D-Druckverfahren wird der Bereich mittels selektivem Lasersintern oder mittels selektivem Laserschmelzen von einem Pulvermaterial gedruckt. Dadurch wird einer Porenbildung in dem Bereich besonders gut entgegengewirkt.

Der 3D-Drucker zum additiven Aufbau eines Bereichs hat ein Druckmodul, eine Steuereinheit und einen verstellbaren Messarm, wobei die Steuereinheit zum Ansteuern von dem Druckmodul auf Basis mittels des Messarms gemessener Positionsdaten und Orientierungsdaten ausgebildet ist. Die Positionsdaten und Orientierungsdaten können von dem Messarm an für ihre Messung besonders gut geeigneten Stellen gemessen werden, die in Blickrichtung von dem Druckmodul auf einen Druckbereich von dem 3D-Drucker nicht ersichtlich sind, weil sie zum Beispiel verdeckt werden. Die Positionsdaten und Orientierungsdaten beschreiben die Ist-Position und die Ist-Orientierung von einem Objekt, auf welches das 3D-Druckmodul einen Bereich drucken kann. Damit werden die bezüglich des 3D-Druckverfahrens beschriebenen Vorteile analog realisiert. Die Positionsdaten und die Orientierungsdaten sind vorzugsweise in der Steuereinheit elektronisch gespeichert.

Gemäß einer Weiterbildung von dem 3D-Drucker ist der Messarm als mobile Einheit ausgebildet, die von einem Messarmhalterungsbereich reversibel abnehmbar ausgebildet ist. Der Messarm kann damit von dem 3D-Drucker entfernt und bei einem weiteren 3D-Drucker analog verwendet werden, oder von dem weiteren 3D-Drucker entfernt und bei dem 3D-Drucker dieser Weiterbildung verwendet werden. Dies spart insbesondere Anschaffungskosten bezüglich de 3D-Druckers beziehungsweise des weiteren 3D-Druckers. Auch kann der Messarm aus dem beschriebenen Druckbereich des 3D-Druckers entfernt werden, was das Druckraumvolumen von dem 3D-Drucker vergrößert.

Gemäß einer Weiterbildung von dem 3D-Drucker hat der 3D-Drucker eine Heizvorrichtung. Die Heizvorrichtung reduziert in einem aktivierten Zustand thermische Spannung beim 3D-Drucken und heizt das Objekt unter der Messung von den Positionsdaten und Orientierungsdaten analog auf.

Gemäß einer Weiterbildung von dem 3D-Drucker hat der 3D-Drucker eine reversibel betätigbare Grundkörperhalterung. Die Grundkörperhalterung kann zum Beispiel den bezüglich des Druckverfahrens beschriebenen vorgefertigten Grundkörper haltern, wodurch das Ausmaß der Positionsabweichung und Orientierungsabweichung reduziert wird.

Gemäß einer Weiterbildung von dem 3D-Drucker hat der Messarm einen Sender zum drahtlosen Senden von den Positionsdaten und Orientierungsdaten, wobei die Steuereinheit einen Empfänger zum drahtlosen Empfangen dieser Daten hat. Die Positionsdaten und Orientierungsdaten können damit unter einer beliebigen Anordnung von dem Messarm relativ zu der Steuereinheit an diese gesendet werden.

Gemäß einer Weiterbildung von dem 3D-Drucker hat der 3D-Drucker einen vorgefertigten Grundkörper, wobei der vorgefertigte Grundkörper bezüglich des Druckmoduls bedruckbar angeordnet und ausgebildet ist. Bei dem vorgefertigten Grundkörper handelt es sich damit um den vorgefertigten Grundkörper von dem 3D-Druckverfahren. Damit wird der 3D-Drucker so bereitgestellt, dass das 3D-Druckverfahren direkt ausgeführt werden kann.

Gemäß einer Weiterbildung von dem 3D-Drucker ist das 3D-Druckmodul zum selektiven Lasersintern oder zum selektiven Laserschmelzen von einem Pulvermaterial ausgebildet. Das 3D-Druckmodul kann dadurch einer Porenbildung beim Drucken besonders gut entgegenwirken und zugleich sehr präzise Drucken.

Gemäß einer Weiterbildung von dem 3D-Drucker ist der Messarm zur Messung von einem absoluten Winkel ausgebildet. Der Messarm kann damit direkt nach seiner Aktivierung die Orientierungsdaten messen, ohne dass dafür eine Winkelreferenzierung nötig wäre, also anders als bei einer inkrementellen Messung von einem Winkel. Der Messarm kann nach dieser Weiterbildung einen oder mehrere Absolutdrehgeber aufweisen.

Von den Figuren zeigen
- Fig. 1:: in einer schematischen Darstellung einen 3D-Drucker;
- Fig. 2a:: in einer schematischen Darstellung einen vorgefertigten Grundkörper;
- Fig. 2b:: in einer schematischen Darstellung ein virtuelles Modell von einem Bereich;
- Fig. 3:: in einer schematischen Darstellung eine Ist-Grundkörperposition und eine Ist-Grundkörperorientierung sowie eine Soll-Grundkörperposition und eine Soll-Grundkörperorientierung;
- Fig. 4:: in einer schematischen Darstellung eine hybride Einheit.

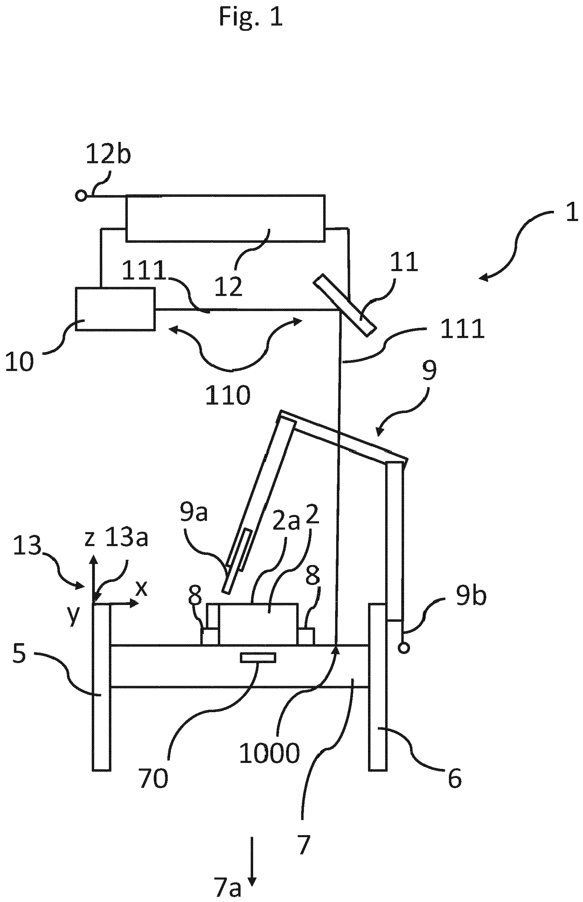

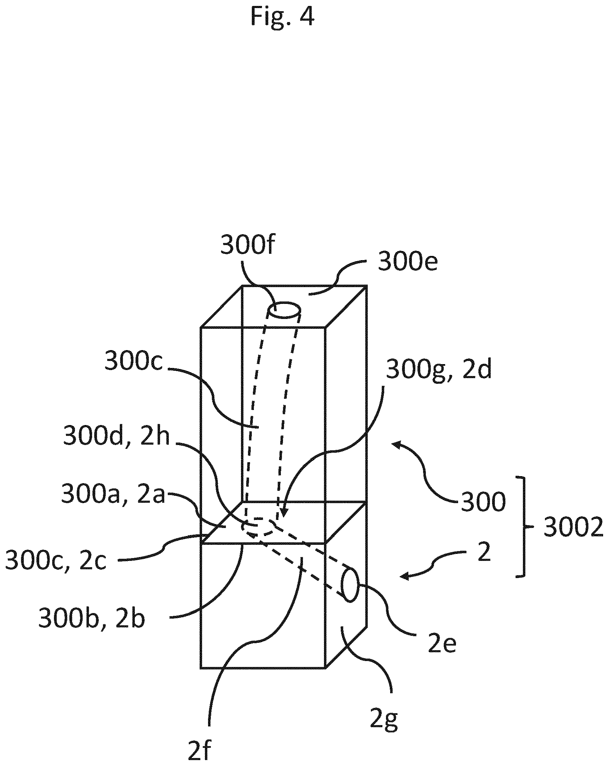

Fig. 1 zeigt in einer schematischen Darstellung einen 3D-Drucker 1, der zum additiven Aufbau von einem in Fig. 4 gezeigten Bereich 300 auf einen vorgefertigten Grundkörper 2 ausgebildet ist.

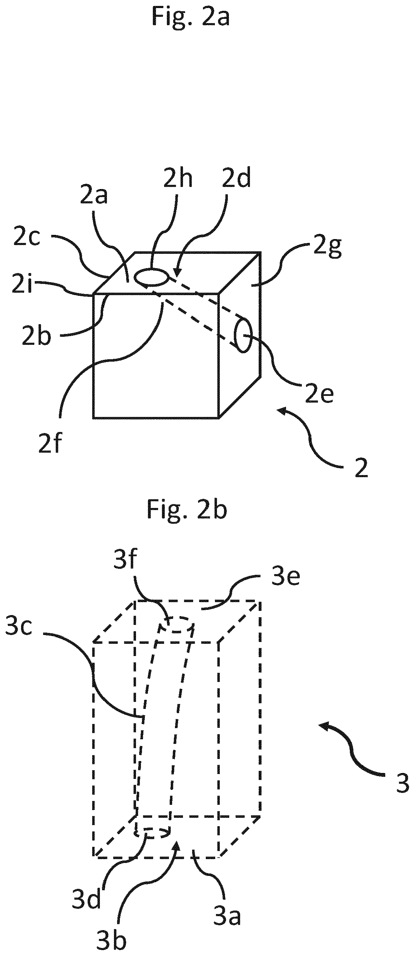

Der 3D-Drucker 1 hat ein Druckmodul 110, das von einem schaltbaren Laser 10 und einem verstellbaren Spiegel 11 gebildet ist, eine Steuereinheit 12, die zum Ansteuern von dem Druckmodul 110 ausgebildet ist, indem sie in einem aktivierten Zustand den Laser 10 einschaltet und den Spiegel 11 verstellt, und zwar einem in Fig. 2b gezeigten virtuellen Modell 3 von dem Bereich 300 folgend, so dass aus einem schichtweise aufgetragenen Pulvermaterial schichtweise der Bereich 300 gedruckt wird, wobei eine verstellbare Platte 7 bezüglich jeder Schicht von dem aufgetragenen Pulvermaterial der entsprechenden Schichtdicke folgend schrittweise nach unten in Richtung von dem Pfeil 7a verstellt wird.

Der 3D-Drucker 1 hat ferner einen Messarm 9, der zur Messung von einer Ist-Grundkörperposition und einer Ist-Grundkörperorientierung von dem vorgefertigten Grundkörper 2 bezüglich eines Maschinenkoordinatensystems 13 ausgebildet und angeordnet ist.

Der vorgefertigte Grundkörper 2 ist konventionell hergestellt, also nicht additiv hergestellt, zum Beispiel subtraktiv aus einem Grundrohkörper, und ist in einer Grundkörperhalterung 8 reversibel lösbar gehaltert. Der vorgefertigte Grundkörper 2 bildet eine Erhebung von der verstellbaren Platte 7, auf der der vorgefertigte Grundkörper 2 sitzt.

Wenn die Grundkörperhalterung 8 gelöst ist, kann der vorgefertigte Grundkörper 2 materialtrennungsfrei von der verstellbaren Platte 7 entfernt werden. Der vorgefertigte Grundkörper 2 kann einen Teil von dem 3D-Drucker 1 bilden, denkbar und auch möglich ist es aber auch, dass der 3D-Drucker 1 ohne den vorgefertigten Grundkörper 2 bereitgestellt wird.

Wenn der Spiegel 11 die in Fig. 1 gezeigte Ausgangsstellung hat, wird ein von dem Laser 10 emittierter Laserstrahl 111 durch den Spiegel 11 so reflektiert, dass der Laserstrahl 111 einen Druckausgangspunkt 1000 unter x- und y-Koordinaten von dem Maschinenkoordinatensystem 13 trifft. Wenn sich in dem Druckausgangspunkt 1000 ein Pulvermaterial befindet, wird dieses aufgeschmolzen oder gesintert, so dass in dem Druckausgangspunkt 1000 jeweils selektiv ein punktförmiger Abschnitt von dem Bereich 300 additiv aufgebaut wird.

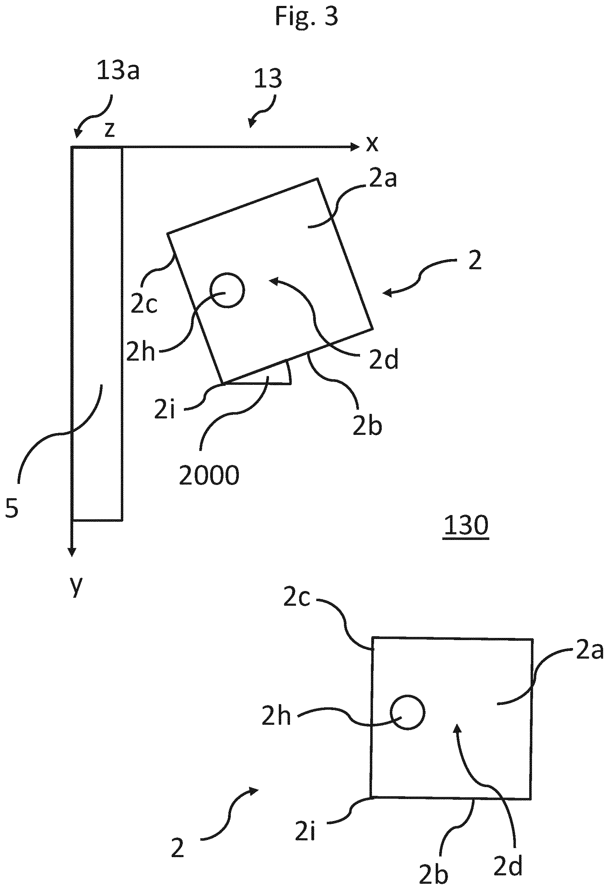

Der vorgefertigte Grundkörper 2 kann beliebig positioniert und beliebig orientiert werden, also auch so, wie in Fig. 1 dargestellt, wonach sich der vorgefertigte Grundkörper 2 außerhalb des Druckausgangspunkts 1000 befindet, und wie Fig. 3 oben links zeigt, so, dass der vorgefertigte Grundkörper 2 nicht mehr an den x- und y-Koordinatenachsen von einem Maschinenkoordinatensystem 13 ausgerichtet ist.

Der Bereich 300 soll unter einer vorgegebenen Positionsbeziehung und unter einer vorgegebenen Orientierungsbeziehung gegenüber dem vorgefertigten Grundkörper 2 auf diesen gedruckt werden, wie Fig. 4 zeigt.

Die Steuereinheit 12 ist in einem Grundmodus aktivierbar, wonach die Steuereinheit 12 entsprechend aktiviert das virtuelle Modell 3 lädt und das Druckmodul 110 dem virtuellen Modell 3 folgend so steuert, dass der Bereich unter der Position von dem Druckausgangspunkt 1000 sowie an der x-Koordinatenachse und an der y-Koordinatenachse von dem Maschinenkoordinatensystem 13 ausgerichtet gedruckt wird. Der Druckausgangspunkt 1000 ist dann der Punkt, unter dessen x- und y-Koordinaten ein in Fig. 4 gezeigter Bereichsmittelpunkt 300g von dem Bereich 300 gedruckt, und die in Fig. 4 gezeigten Bereichskanten 300b und 300c von dem Bereich 300 sind dann an der x-Koordinatenachse beziehungsweise an der y-Koordinatenachse von dem Maschinenkoordinatensystem 13 in Blickrichtung parallel zu der z-Koordinatenachse von dem Maschinenkoordinatensystem 13 ausgerichtet.

Wenn der vorgefertigte Grundkörper 2 unter einer Soll-Grundkörperposition positioniert ist, hat ein Oberseitenmittelpunkt 2d von einer Grundkörperoberseite 2a des vorgefertigten Grundkörpers 2 die x- und y-Koordinaten von dem Druckausgangspunkt 1000 bezüglich des Maschinenkoordinatensystems 13, wie Fig. 3 unten rechts in einer schematischen Aufsicht zeigt.

Wenn der vorgefertigte Grundkörper 2 unter einer Soll-Grundkörperorientierung orientiert ist, sind die in Blickrichtung parallel zu der z-Koordinatenachse von dem Maschinenkoordinatensystem 13 ersichtlichen Grundkörperkanten 2b und 2c von dem vorgefertigten Grundkörper 2 an der x-Koordinatenachse beziehungsweise an der y-Koordinatenachse von dem Maschinenkoordinatensystem 13 ausgerichtet, wie Fig. 3 unten rechts in der schematischen Aufsicht zeigt.

Denkbar und auch möglich sind aber auch eine andere Soll-Grundkörperposition und/oder Soll-Grundkörperorientierung, die je nach der Geometrie von dem vorgefertigten Grundkörper 2 vorgegeben werden können, so könnte zum Beispiel auch eine in Aufsicht nicht ersichtliche Grundkörperkante in der Soll-Grundkörperorientierungen an der x-Koordinatenachse von dem Maschinenkoordinatensystem 13 ausgerichtet sein oder ein Bohrungsmittelpunkt von dem vorgefertigten Grundkörper 2 unter der Soll-Grundkörperposition die x- und y-Koordinaten von dem Druckausgangspunkt 1000 haben.

Wenn die Steuereinheit 12 in dem Grundmodus aktiv ist und der vorgefertigte Grundkörper 2 unter der Soll-Grundkörperposition positioniert und unter der Soll-Grundkörperorientierung orientiert ist, wird der Bereich 300 auf den vorgefertigten Grundkörper 2 unter Einhaltung von einer vorgegebenen Positionsbeziehung und einer vorgegebenen Orientierungsbeziehung gedruckt.

Ohne eine Positions-Kompensation mittels der Steuereinheit 12 wird die vorgegebene Positionsbeziehung beim Drucken nicht mehr eingehalten, wenn die Ist-Grundkörperposition von der Soll-Grundkörperposition abweicht, also eine Positionsabweichung vorliegt, wie sie Fig. 3 oben links zeigt. Analoges gilt für die vorgegebene Orientierungsbeziehung, wenn die Ist-Grundkörperorientierung von der Soll-Grundkörperorientierung abweicht, also eine Orientierungsabweichung hat, wie sie Fig. 3 oben links zeigt.

Bereits durch einen Einspannvorgang, der üblicherweise für ein präzises 3D-Drucken nicht hinreichend positionsgetreu und orientierungsgetreu wiederholbar ist, bezüglich des vorgefertigten Grundkörpers 2, kann es zu der Positionsabweichung und der Orientierungsabweichung kommen, erst recht aber, wenn der vorgefertigte Grundkörper 2 auf der verstellbaren Platte 7 nach Augenmaß positioniert und orientiert wird.

Um solche und auch Positionsabweichungen und Orientierungsabweichungen aus anderen Gründen beim 3D-Drucken von dem Bereich 300 zu kompensieren, hat der 3D-Drucker 1 den Messarm 9, mittels dem die Ist-Grundkörperposition und die Ist-Grundkörperorientierung unter einer jeweiligen Antastung von dem vorgefertigten Grundkörper 2 gemessen werden, wobei die Steuereinheit 12 in einem Kompensationszustand auf Basis der so gemessenen Ist-Grundkörperposition und der so gemessenen Ist-Grundkörperorientierung die Positionsabweichung und die Orientierungsabweichung ermittelt und das Druckmodul 110 zur Kompensation dieser ansteuert. Die vorgegebene Positionsbeziehung und die vorgegebene Orientierungsbeziehung werden dadurch auch unter der Ist-Grundkörperposition und der Ist-Grundkörperorientierung beim 3D-Drucken von dem Bereich 300 eingehalten. Das 3D-Drucken von dem Bereich 300 wird damit dem vorgefertigten Grundkörper räumlich nachgeführt, weil die Steuereinheit 12 "weiß", wie der vorgefertigte Grundkörper positioniert und orientiert ist. Die Steuereinheit 12 ist damit zum Ansteuern von dem Druckmodul 110 auf Basis mittels des Messarms 9 gemessener Positionsdaten und Orientierungsdaten ausgebildet.

Der Messarm 9 ist räumlich verstellbar und an einer Wandung 6 reversibel abnehmbar gehaltert. Der Messarm 9 ist bezüglich des Ursprungspunkts 13a des Maschinenkoordinatensystems 13 referenziert. Der Messarm 9 "weiß" damit, wo der "Nullpunkt" bezüglich der durch den Messarm 9 angetasteten Punkte befindlich ist und auch, wie die x-, y- und z-Koordinatenachsen von dem Maschinenkoordinatensystem 13 ausgerichtet sind. So kann der Messarm 9 die Koordinaten von jedem durch ihn antastbaren Punkt bezüglich des Maschinenkoordinatensystems 13 messen. Der Messarm 9 hat einen Mestaster 9a der exemplarisch für eine taktile Antastung von dem vorgefertigten Grundkörper 2 ausgebildet und angeordnet ist, denkbar und auch möglich ist es aber auch, dass der Messtaster 9a gegen einen berührungslos arbeitenden Messtaster ausgetauscht wird.

Ohne einen Messtaster verbleibt von dem Messarm 9 ein Messarmgrundkörper, der mit dem Messtaster 9a oder einem anderen Messtaster ausgestattet werden kann, so zum Beispiel auch mit einem Laserscanner zur Erfassung der Geometrie von dem Bereich 300 und/oder von dem vorgefertigten Grundkörper 2, um nach dem Drucken von dem Bereich 300 zu prüfen, ob und gegebenenfalls inwieweit die vorgegebene Positionsbeziehung und die vorgegebene Orientierungsbeziehung von ihren Soll-Vorgaben nach dem Drucken von dem Bereich 300 abweichen, zum Beispiel aufgrund einer Abkühlung von dem Bereich nach dem Drucken. Eine solche zusätzliche Prüfung gehört damit zum Funktionsumfang von dem 3D-Drucker 1 und kann an der in Fig. 4 gezeigten hybriden Einheit 3002 durchgeführt werden.

Wenn der Messarm 9 die Ist-Grundkörperposition misst, tastet der Messarm 9 mittels des Messtasters 9a den Oberseitenmittelpunkt 2d an und misst so die x- und y-Koordinaten von dem Oberseitenmittelpunkt 2d bezüglich des Maschinenkoordinatensystems 13. Ergänzend oder alternativ kann der Messarm 9 einen Grundkörpereckpunkt 2i von der Grundkörperoberseite 2a antasten, um die Ist-Grundkörperposition zu messen und auch um einen Drehpunkt für einen Drehwinkel zu messen.

Wenn mehrere Punkte angetastet werden, kann der Messarm 9 mittels nicht dargestellter Drehgeber auch absolute Drehwinkel bezüglich des vorgefertigten Grundkörpers 2 und damit auch die Ist-Grundkörperorientierung messen; die Messung absoluter Drehwinkel ist von einer inkrementellen Messung von Drehwinkeln verschieden.

Für den 3D-Druck von dem Bereich 300 wird der in Fig. 3 oben links gezeigte Drehwinkel 2000 benötigt, unter dem der vorgefertigte Grundkörper 2 in Blickrichtung parallel zu der z-Koordinatenachse von dem Maschinenkoordinatensystem 13 gegenüber der Soll-Grundkörperorientierung gedreht ist, um die Ist-Grundkörperorientierung zu messen.

Wie Fig. 3 oben links zeigt, hat der Drehwinkel 2000 einen an der x-Koordinatenachse von dem Maschinenkoordinatensystem 13 ausgerichteten Winkelschenkel und einen an der Grundkörperkante 2b ausgerichteten Winkelschenkel. In dem Scheitelpunkt von dem Drehwinkel 2000 liegt der Grundkörpereckpunkt 2i.

Der Messarm 9 misst in dem messaktiven Zustand den Drehwinkel 2000 und damit die Ist-Grundkörperorientierung, indem der Messarm 9 mittels des Messtasters 9a die Grundkörperkante 2b antastet, wobei eine vorherige Antastung von dem Oberseitenmittelpunkt 2d als alternativer Drehpunkt bezüglich des Drehwinkels 2000 dient; denkbar und auch möglich ist es aber auch, dass der Messarm 9 mittels des Messtasters 9a den Grundkörpereckpunkt 2i antastet und so den Drehpunkt von dem Drehwinkel 2000 direkt antastet. Der Messarm 9 muss also bezüglich der Drehwinkelmessung und damit bezüglich der Messung von der Ist-Grundkörperorientierung "wissen", wo sich der Punkt in Blickrichtung parallel zu der z-Koordinatenachse von dem Maschinenkoordinatensystem 13 befindet, bezüglich dem der vorgefertigte Grundkörper 2 in die Ist-Grundkörperorientierung gedreht ist. Unter der beschriebenen Antastung von der Grundkörperkante 2b "weiß" der Messarm 9 unter Vorgabe von der Ausrichtung von der x-Koordinatenachse von dem Maschinenkoordinatensystem 13 sodann, wie der Drehwinkel 2000 zu bemessen ist.

Die Steuereinheit 12 ermittelt auf Basis von dem mittels des Messarms 9 gemessenen Drehwinkel 2000 und auf Basis von der gespeicherten Ausrichtung von der x-Koordinatenachse von dem Maschinenkoordinatensystem 13 den Betrag und das Vorzeichen von dem Drehwinkel 2000, so dass der Bereich 300 in dem I<ompensationszustand von der Steuereinheit 12 nicht mehr nur unter einer Ausrichtung an der x-Koordinatenachse von dem Maschinenkoordinatensystem 13 gedruckt wird, sondern unter dem Drehwinkel 2000, also so, wie der vorgefertigte Grundkörper 2 oben links in Fig. 3 orientiert ist.

Der Messarm 9 misst in einem messaktiven Zustand die Ist-Grundkörperposition und die Ist-Grundkörperorientierung von dem vorgefertigten Grundkörper 2 bezüglich des Maschinenkoordinatensystems 13 und sendet die so gemessenen Positionsdaten beziehungsweise Orientierungsdaten mittels eines Senders 9b drahtlos an einen Empfänger 12b von der Steuereinheit 12, so dass die Steuereinheit 12 "weiß", unter welcher Position und Orientierung sich der vorgefertigte Grundkörper 2 bezüglich des Maschinenkoordinatensystems 13 befindet.

Um das Druckmodul 110 unter bezüglich des Maschinenkoordinatensystems 13 gemessenen Koordinaten direkt zu steuern, sind in der Steuereinheit 12 die x- und y-Koordinaten von dem Druckausgangspunkt 1000 bezüglich des Maschinenkoordinatensystems 13 gespeichert. Die Steuereinheit 12 "weiß" damit, wo sich der Druckausgangspunkt 1000 bezüglich des Maschinenkoordinatensystems 13 befindet, und kann das Druckmodul 110 unter den Koordinaten bezüglich des Maschinenkoordinatensystems 13 steuern.

Fig. 2a zeigt den vorgefertigten Grundkörper 2 in Alleinstellung. In Fig. 2a ist ersichtlich, dass der vorgefertigte Grundkörper 2 einen internen Grundkörperkanal 2f hat, wobei der interne Grundkörperkanal 2f eine Eintrittsöffnung 2e aufseiten von einer Seitenfläche 2g von dem vorgefertigten Grundkörper 2 und aufseiten von der Grundkörperoberseite 2a, also dort, wo der Bereich 300 gedruckt werden soll, eine Austrittsöffnung 2h hat. Die Austrittsöffnung 2h ist bezüglich der Grundkörperoberseite 2a exzentrisch angeordnet; denkbar und auch möglich ist aber auch eine entsprechende zentrische Anordnung von der Austrittsöffnung 2h.

Fig. 2b zeigt das virtuelle Modell 3 von dem Bereich 300. Das virtuelle Modell 3 hat einen virtuellen Kanal 3c, der eine virtuelle Eintrittsöffnung 3d aufseiten von einer virtuellen Modellunterseite 3a von dem virtuellen Modell 3 und eine virtuelle Austrittsöffnung 3f aufseiten von einer virtuellen Modelloberseite 3e von dem virtuellen Modell 3 hat. Der virtuelle Kanal 3c ist räumlich gekrümmt. Die virtuelle Eintrittsöffnung 3d ist bezüglich der virtuellen Modellunterseite 3b exzentrisch angeordnet. Die virtuelle Modellunterseite hat einen virtuellen Modellmittelpunkt 3b. Das virtuelle Modell 3 ist in der Steuereinheit 12 geladen. Der Bereich 300 wird dem virtuellen Modell 3 folgend schichtweise gedruckt, indem die dem virtuellen Modell 3 zugeordneten Geometriedaten das Druckmodul 110 entsprechend steuern, und zwar unter der mittels des Messarms 9 gemessenen Ist-Grundkörperposition und der gemessenen Ist-Grundkörperorientierung, wenn die Steuereinheit 12 in dem Kompensationsmodus aktiviert ist, und unter der Soll-Grundkörperposition und unter der Soll-Grundkörperorientierung, wenn die Steuereinheit 12 in dem Grundmodus aktiv ist.

Das virtuelle Modell 3 ist beispielhaft als Quader dargestellt, denkbar und auch möglich ist aber auch eine andere Geometrie, so zum Beispiel eine Geometrie von einem Werkzeugkopf mit Plattensitzen und mit einem internen Kanal oder die Geometrie von einer Turbinenschaufel mit einem internen Hohlraum.

Fig. 3 zeigt unten rechts in Blickrichtung parallel zu der z-Koordinatenachse von dem Maschinenkoordinatensystem 13 auf die Grundkörperoberseite 2a den vorgefertigten Grundkörper 2 unter der Soll-Grundkörperposition und unter der Soll-Grundkörperorientierung. Unter der Soll-Grundkörperposition hat der Oberseitenmittelpunkt 2d die x- und y-Koordinaten von dem Druckausgangspunkt 1000 bezüglich des Maschinenkoordinatensystems 13. Unter der Soll-Grundkörperorientierung ist die Grundkörperkante 2b an der x-Koordinatenachse von dem Maschinenkoordinatensystem 13 ausgerichtet und die Grundkörperkante 2c an der y-Koordinatenachse von dem Maschinenkoordinatensystem 13. Die Grundkörperoberseite 2a ist unter der Soll-Grundkörperposition sowie unter der Soll-Grundkörperorientierung in einer von der x- und y-Koordinatenachse von dem Maschinenkoordinatensystem 13 aufgespannten Aufbauebene 130 parallel zu dieser in dieser enthalten; auch unter der Ist-Grundkörperposition sowie unter der Ist-Grundkörperorientierung verbleibt die Grundkörperoberseite 2a so in der Aufbauebene 130. In der Aufbauebene 130 wird das Pulvermaterial schichtweise beim 3D-Drucken von dem Bereich 300 aufgetragen.

Fig. 3 zeigt ferner oben links den vorgefertigten Grundkörper 2 unter der Ist-Grundkörperposition und unter der Ist-Grundkörperorientierung. Unter der Ist-Grundkörperposition wurde der Oberseitenmittelpunkt 2d in der Aufbauebene 130 bezüglich der Soll-Grundkörperposition von dieser weg verschoben, hat also nicht mehr die x- und y-Koordinaten von dem Ausgangsdruckpunkt 1000, sondern neue bezüglich des Maschinenkoordinatensystems 13.

Unter der Ist-Grundkörperorientierung, wie Fig. 3 oben links zeigt, wurde die Grundkörperkante 2b in der Aufbauebene 130 unter dem Drehwinkel 2000 gedreht, so dass die Grundkörperkante 2b nicht mehr an der x-Koordinatenachse von dem Maschinenkoordinatensystem 13 ausgerichtet ist, sondern den Drehwinkel 2000 gegenüber der x-Koordinatenachse von dem Maschinenkoordinatensystem 13 in Blickrichtung parallel zu der z-Koordinatenachse von dem Maschinenkoordinatensystem 13 hat.

In Fig. 3 ist ferner ersichtlich, dass das Maschinenkoordinatensystem 13 an der Wandung 5 ausgerichtet ist und bezüglich der Wandung 5 ortsfest ist. Zeitlich bevor der Messarm 9 die Ist-Grundkörperposition mittels des Messtasters 9a antastet, tastet der Messarm 9 den Ursprungspunkt 13a an und ordnet diesem Punkt die Koordinaten (0,0,0) des Maschinenkoordinatensystems 13 zu, so dass alle weiteren angetasteten Punkte bezüglich des Ursprungs 13a von dem Maschinenkoordinatensystem 13 gemessen werden.

Der Messarm 9 kann in einem Kalibrierzustand die in der Steuereinheit 12 gespeicherte Orientierung der x- und y-Koordinatenachsen von dem Maschinenkoordinatensystem 13 prüfen, indem der Messarm 9 mittels des Messtasters 9a die Wandung 5 dort antastet, wo die x- und y-Koordinatenachsen an dieser ausgerichtet sind, wobei auf Basis davon die in der Steuereinheit 12 gespeicherte Orientierung der x- und y-Koordinatenachsen von dem Maschinenkoordinatensystem 13 korrigiert werden.

Das Druckmodul 110 ist auf Basis mittels des Messarms 9 an einem Probedruckbereich gemessener Kalibrierdaten kalibriert, indem der Probedruckbereich mittels des Druckmoduls 110 unter der Grundeinstellung von der Steuereinheit 12 gedruckt, an dem so gedruckten Probedruckbereich die Position von dem Druckausgangspunkt 1000 mittels des Messarms 9 gemessen und auf Basis davon das Druckmodul 110 bezüglich des Druckausgangspunkts 1000, also des "Nullpunkts" von dem Druckmodul 110, kalibriert wurde. An dem Probedruckbereich wurde mittels des Messarms 9 der Winkel von einer Probedruckkante bezüglich der x-Koordinatenachse von dem Maschinenkoordinatensystem 13 gemessen und so das Druckmodul 110 bezüglich eines an der x-Koordinatenachse von dem Maschinenkoordinatensystem 13 ausgerichteten Druckens, also bezüglich eines Druckens unter exemplarisch "0°", kalibriert, so dass also ein Drucken unter der Vorgabe "0°" an der x-Koordinatenachse von dem Maschinenkoordinatensystem 13 ausgerichtet ist.

Fig. 4 zeigt in einer schematischen perspektiven Ansicht eine hybride Einheit 3002. Die hybride Einheit 3002 wurde durch den 3D-Drucker 1 hergestellt, indem der Bereich 300 in dem Kompensationszustand von der Steuereinheit 12 mittels des Druckmoduls 110 auf die Grundkörperoberseite 2a und damit auf den vorgefertigten Grundkörper 2 gedruckt wurde, wobei die vorgegebene Positionsbeziehung und die vorgegebene Orientierungsbeziehung eingehalten wurden, während der vorgefertigte Grundkörper 2 unter der Ist-Grundkörperposition positioniert und unter der Ist-Grundkörperorientierung orientiert ist. Indem die vorgegebene Positionsbeziehung und die vorgegebene Orientierungsbeziehung eingehalten sind, wurde ein dem virtuellen Kanal 3c folgender Kühlmittelkanal 300c räumlich gekrümmt unter einem fluidkommunizierenden Anschluss an den internen Grundkörperkanal 2f gedruckt. Der Kühlmittelkanal 300c hat eine Eintrittsöffnung 300d, die auf der Austrittsöffnung 2h sitzt, und eine Austrittsöffnung 300f in einer Bereichsoberseite 300e von dem Bereich 300. Der Bereich 300 hat ferner eine Bereichsunterseite 300a, die bündig mit der Gründerkörperoberseite 2a abschließt und auf dieser stoffschlüssig sitzt, wobei eine Bereichskante 300b mit der Grundkörperkante 3b bündig und eine Bereichskante 300c mit der Grundkörperkante 3c bündig abschließt. Der Bereich 300 kann aber auch so gedruckt werden, unter einer entsprechenden Skalierung von dem virtuellen Modell 3, dass die Bereichskanten 300b und 300c zwar weiterhin parallel zu der Grundkörperkante 2b beziehungsweise 2c orientiert sind, aber innerhalb der Grundkörperoberseite 2a gedruckt werden.

Die Bereichsunterseite 300a hat einen Unterseitenmittelpunkt 300g, der die Position von dem Oberseitenmittelpunkt 2d hat, wodurch der Bereich 300 bezüglich des vorgefertigten Grundkörpers 2 zentriert und auch bezüglich einer Drehung von der hybriden Einheit 3002 bezüglich einer senkrecht zu der Grundkörperoberseite 2a orientierten Drehachse, entlang welcher sich die hybride Einheit 3002 erstreckt, ausgewuchtet gedruckt ist. Die hybride Einheit 3002 ist damit für entsprechende Drehanwendung, wie zum Beispiel für Bohren, Reiben oder Fräsen ausgebildet.

Der 3D-Drucker 1 führt ein 3D-Druckverfahren zum additiven Aufbau des Bereichs 300 auf den vorgefertigten Grundkörper 2 aus, wobei das 3D-Druckverfahren die folgenden, bezüglich Fig. 1 bis 4 beschriebenen Schritte hat:
Messen von der Ist-Grundkörperposition mittels des Messarms 9; Ermitteln von einer Positionsabweichung zwischen der Ist-Grundkörperposition und der Soll-Grundkörperposition; Messen von der Ist-Grundkörperorientierung mittels des Messarms 9; Ermitteln von einer Orientierungsabweichung zwischen der Ist-Grundkörperorientierung und einer Soll-Grundkörperorientierung des vorgefertigten Grundkörpers 2; 3D-Drucken von dem Bereich 300 auf den vorgefertigten Grundkörper 2, indem die Positionsabweichung und die Orientierungsabweichung beim 3D-Drucken kompensiert werden.

Wie Fig. 4 zeigt, wurde mittels des 3D-Druckens der Bereich 300 unter Ausbildung des Kühlmittelkanals 300c gedruckt, wobei der Kühlmittelkanal 300c an den Grundkörperkanal 2f beim 3D-Drucken angeschlossen wird, indem die ermittelte Positionsabweichung und die ermittelte Orientierungsabweichung beim 3D-Drucken kompensiert werden.

Der beschriebene Messarmgrundkörper mit einem Laserscanner anstelle von dem Messtaster 9a kann in einem dem 3D-Drucken nachgeschalteten Prüfzustand von dem 3D-Drucker 1 dazu verwendet werden, die vorgegebene Positionsbeziehung und die vorgegebene Orientierungsbeziehung an der hybriden Einheit 3002 zu messen, also eine Ist-Positionsbeziehung und ein Ist-Orientierungsbeziehung, und damit wie der Bereich 300 auf der Grundkörperoberseite 2a bezüglich dieser positioniert und wie der Bereich 300 bezüglich der Grundkörperoberseite 2a orientiert ist, wobei auf Basis der so gewonnenen Messdaten die Ist-Orientierungsbeziehung mit der vorgegebenen Orientierungsbeziehung, also einer Soll-Orientierungsbeziehung, und die Ist-Positionsbeziehung mit der vorgegebenen Positionsbeziehung, also einer Soll-Positionsbeziehung, verglichen wird, um die Maßhaltigkeit der hybriden Einheit 3002 zu bestimmen.

Die hybride Einheit 3002 hat den Vorteil, dass aufseiten des vorgefertigten Grundkörpers 2 auf ein "Standardbauteil" verwendet werden kann, also eines, das auch mit anderen Bereichen zusammenwirken kann, wohingegen der Bereich 300 aufgrund des 3D-Druckens an eine jeweils spezielle Verwendung und diesbezügliche Verwendungsbedingungen angepasst additiv hergestellt werden kann. Die hybride Einheit 3002 wird damit insoweit additiv aufgebaut, wie dies benötigt wird, und greift im Übrigen auf den üblicherweise kostengünstig vorgefertigten Grundkörper 2 zurück.

Beim 3D-Drucken von dem Bereich 300 wird das beschriebene Pulvermaterial auf den vorgefertigten Grundkörper 2 aufseiten von der Grundkörperoberseite 2a schichtweise aufgetragen und entsprechend schichtweise von dem Laserstrahl 111 ausgeschmolzen oder gesintert. Bei dem Pulvermaterial handelt es sich vorzugsweise um Stahlpulver, noch mehr bevorzugt um ein Maraging-Stahlpulver, also ein martensitaushärtbares Stahlpulver.

Das Pulvermaterial wird für das 3D-Drucken von dem Bereich 300 so gewählt, dass es zu dem vorgefertigten Grundkörper 2 passt, zumindest bezüglich einer chemischen Grundzusammensetzung von dem vorgefertigten Grundkörper 2, so zum Beispiel ein Stahlpulver, wenn der vorgefertigte Grundkörper 2 aus Stahl hergestellt ist, was auch bevorzugt wird. Alternativ denkbar und auch möglich ist aber auch ein Titanpulver, wenn der vorgefertigte Grundkörper aus einer Titanlegierung hergestellt ist, was im Falle von einem Turbinenbauteil vorteilhaft ist.

Die verstellbare Platte 7 hat eine Heizvorrichtung 70. Wenn die Heizvorrichtung 70 aktiv ist, heizt sie den vorgefertigten Grundkörper 2 während der Messung von der Ist-Grundkörperposition und der Ist-Grundkörperorientierung und auch während des 3D-Druckens auf, letzteres um thermische Spannung beim Drucken zu reduzieren, ersteres, damit die Ist-Grundkörperposition und die Ist-Grundkörperorientierung unter der thermischen Ausdehnung von dem vorgefertigten Grundkörper 2 gemessen werden, die der vorgefertigte Grundkörper 2 auch während des 3D-Druckens dann hat. Die Heizvorrichtung 70 kann den vorgefertigten Grundkörper 2 auf eine Temperatur im Bereich von 50°C bis 650°C aufheizen, vorzugsweise auf eine Temperatur im Bereich von 150°C bis 250°C. Bei dem durch den 3D-Drucker 1 ausgeführten 3D-Druckverfahren wird der vorgefertigte Grundkörper 2 also beim Messen von der Ist-Grundkörperposition und der Ist-Grundkörperorientierung und beim 3D-Drucken des Bereichs 300 aufgeheizt. Denkbar und auch möglich ist es aber auch, den 3D-Drucker 1 und damit das 3D-Druckverfahren ohne die Heizvorrichtung 70 bereitzustellen beziehungsweise durchzuführen, wobei aber das Aufheizen mittels der Heizvorrichtung 70 bezüglich der Verwendung von Stahlpulver für das Pulvermaterial besonders vorteilhaft ist.

Der 3D-Drucker 1 ist zum 3D-Drucken von dem Bereich 300 mittels selektiven Lasersinterns oder selektiven Laserschmelzens ausgebildet. Denkbar und auch möglich sind aber auch andere 3D-Druckverfahren mittels derer der 3D-Drucker den Bereich 300 drucken kann.

Für die Messung von der Ist-Grundkörperorientierung kann der Messarm 9 auch den vorgefertigten Grundkörper 2 an einer in Aufsicht gemäß Fig. 3 nicht sichtbaren Stelle antasten, zum Beispiel an der Eintrittsöffnung 2e, also seitlich.

So kann die Soll-Grundkörperorientierung auch durch die Orientierung von einem seitlichen Anschlusselement und/oder von einer Seitenfläche des vorgefertigten Grundkörpers 2 vorgegeben werden und die Ist-Grundkörperorientierung mittels einer entsprechenden Antastung gemessen werden.

Der 3D-Drucker 1 und damit das durch ihn realisierte 3D-Druckverfahren zum additiven Aufbau des Bereichs 300 auf den vorgefertigten Grundkörper 2 kompensieren beim 3D-Drucken die Positionsabweichung von der Ist-Grundkörperposition bezüglich der Soll-Grundkörperposition und die Orientierungsabweichung von der Ist-Grundkörperorientierung bezüglich der Soll-Grundkörperorientierung, so dass die vorgegebene Positionsbeziehung und die vorgegebene Orientierungsbeziehung eingehalten werden, ohne dass der vorgefertigte Grundkörper 2 dafür in die Soll-Grundkörperposition und Soll-Grundkörperorientierung gebracht werden muss, womit die vorgegebene Positionsbeziehung und die vorgegebene Orientierungsbeziehung besser eingehalten werden, der Vorbereitungsaufwand für das 3D-Drucken reduziert wird und der Bereich 300 unter einer besseren stoffschlüssigen Anbindung auf die Grundkörperoberseite 2a gedruckt wird. Der Messarm 9 misst die Ist-Grundkörperposition und die Ist-Grundkörperorientierung an dem vorgefertigten Grundkörper 2, wobei auf Basis davon die Positionsabweichung und die Orientierungsabweichung ermittelt werden, bevor der Bereich 300 gedruckt wird.

## Patentansprüche

1. 3D-Druckverfahren zum additiven Aufbau eines Bereichs (300) auf einen vorgefertigten Grundkörper (2), wobei das 3D-Druckverfahren die folgenden Schritte hat:
Messen von einer Ist-Grundkörperposition des vorgefertigten Grundkörpers (2) mittels eines Messarms (9);
Ermitteln von einer Positionsabweichung zwischen der Ist-Grundkörperposition und einer Soll-Grundkörperposition des vorgefertigten Grundkörpers (2);
Messen von einer Ist-Grundkörperorientierung des vorgefertigten Grundkörpers (2) mittels des Messarms (9);
Ermitteln von einer Orientierungsabweichung zwischen der Ist-Grundkörperorientierung und einer Soll-Grundkörperorientierung des vorgefertigten Grundkörpers (2);
3D-Drucken von dem Bereich (300) auf den vorgefertigten Grundkörper (2), indem die Positionsabweichung und die Orientierungsabweichung beim 3D-Drucken kompensiert werden.

2. 3D-Druckverfahren nach Anspruch 1, wobei mittels des 3D-Druckens der Bereich (300) unter Ausbildung eines Kühlmittelkanals (300c) gedruckt wird, wobei der Kühlmittelkanal (300c) an einen Grundkörperkanal (2f) des vorgefertigten Grundkörpers (2) beim 3D-Drucken angeschlossen wird, indem die ermittelte Positionsabweichung und die ermittelte Orientierungsabweichung beim 3D-Drucken kompensiert werden.

3. 3D-Druckverfahren nach Anspruch 2, wobei der Kühlmittelkanal (300c) räumlich gekrümmt gedruckt wird.

4. 3D-Druckverfahren nach einem der vorhergehenden Ansprüche, wobei der vorgefertigte Grundkörper (2) beim Messen von der Ist-Grundkörperposition und der Ist-Grundkörperorientierung und beim 3D-Drucken des Bereichs (300) aufgeheizt wird.

5. 3D-Druckverfahren nach einem der vorhergehenden Ansprüche, wobei der Bereich (300) einem Werkzeugkopf oder einem Turbinenbauteil folgend gedruckt wird.

6. 3D-Druckverfahren nach einem der vorhergehenden Ansprüche, wobei nach dem 3D-Drucken des Bereichs (300) mittels eines Messarmgrundkörpers (9) von dem Messarm (9) geprüft wird, ob eine vorgegebene Positionsbeziehung von dem Bereich (300) gegenüber dem vorgefertigten Grundkörper (2) und ob eine vorgegebene Orientierungsbeziehung von dem Bereich (300) gegenüber dem vorgefertigten Grundkörper (2) eingehalten werden.

7. 3D-Druckverfahren nach einem der vorhergehenden Ansprüche, wobei der Bereich (300) mittels selektivem Lasersintern oder mittels selektivem Laserschmelzen von einem Pulvermaterial gedruckt wird.

8. 3D-Drucker (1) zum additiven Aufbau eines Bereichs (300), wobei der 3D-Drucker (1) ein Druckmodul (110), eine Steuereinheit (12) und einen verstellbaren Messarm (9) hat, wobei die Steuereinheit (12) zum Ansteuern von dem Druckmodul (110) auf Basis mittels des Messarms (9) gemessener Positionsdaten und Orientierungsdaten ausgebildet ist.

9. 3D-Drucker (1) nach Anspruch 8, wobei der Messarm (9) als mobile Einheit (9) ausgebildet ist, die von einem Messarmhalterungsbereich (6) reversibel abnehmbar ausgebildet ist.

10. 3D-Drucker (1) nach Anspruch 8 oder 9, wobei der 3D-Drucker (1) eine Heizvorrichtung (70) hat.

11. 3D-Drucker (1) nach einem der Ansprüche 8 bis 10, wobei der 3D-Drucker (1) eine reversibel betätigbare Grundkörperhalterung (8) hat.

12. 3D-Drucker (1) nach einem der Ansprüche 8 bis 11, wobei der Messarm (9) einen Sender (9b) zum drahtlosen Senden von den Positionsdaten und Orientierungsdaten hat, wobei die Steuereinheit (12) einen Empfänger (12b) zum drahtlosen Empfangen dieser Daten hat.

13. 3D-Drucker (1) nach einem der Ansprüche 8 bis 12, wobei der 3D-Drucker (1) einen vorgefertigten Grundkörper (2) hat, wobei der vorgefertigte Grundkörper (2) bezüglich des Druckmoduls (110) bedruckbar angeordnet und ausgebildet ist.

14. 3D-Drucker (1) nach einem der Ansprüche 8 bis 13, wobei das 3D-Druckmodul (110) zum selektiven Lasersintern oder zum selektiven Laserschmelzen von einem Pulvermaterial ausgebildet ist.

15. 3D-Drucker (1) nach einem der Ansprüche 8 bis 14, wobei der Messarm (9) zur Messung von einem absoluten Winkel (2000) ausgebildet ist.
